# EUROPEAN PATENT APPLICATION

(11) **EP 4 742 282 A1**
(43) Date of publication of application: **13.05.2026**
(21) Application number: 24211785.1
(22) Date of filing: 08.11.2024
(51) Int. Cl.: H01F 7/08, H01F 7/121, H01F 7/16, H01H 50/30

(54) **ELECTROMAGNETIC LINEAR ACTUATOR**

(71) Applicant: TE Connectivity Solutions GmbH, 8200 Schaffhausen (CH); Tyco Electronics Componentes Electromecânicos Lda, 7005-797 Évora (PT)
(72) Inventor: FONTES, Hugo, 12347 Berlin (DE); KROEKER, Matthias, 12347 Berlin (DE); DUARTE SILVA, Antonio Perdigao, 7005-797 Evora (PT); MOREIRA, Vitor, 7005-797 Evora (PT)
(74) Representative: Grünecker Patent- und Rechtsanwälte PartG mbB

(57) **Abstract**

The invention relates to an electromagnetic linear actuator (10) for moving a rod (300) along an axial direction (A) relative to a support structure (600). The electromagnetic actuator comprises an exciting coil (400) wound around a circumferential direction (C) perpendicular to the axial direction (A); a fixed core (500) located at a first axial end of the coil (400) and fixed to the support structure (600); a and rod-moving arrangement comprising a rod-moving core (100) arranged at a second axial end of the coil (400) and for attaching to the rod (300). The rod-moving core (100) is moving between an open position when the coil (400) is not energized and a closed position when the coil (400) is energized. The open position and the closed position are spaced apart in the axial direction (A) by a rod-moving distance (d_rod). The electromagnetic actuator comprises further a shock-absorbing arrangement comprising a shock-absorbing core (200) disposed between the fixed core (500) and the rod-moving core (100). The shock-absorbing core (200) is moving between a stop position, in which the shock-absorbing core (200) is retained by a retaining force for blocking the rod-moving core (100) to move in the closed position when the coil (400) is not energized and a release position in which the shock-absorbing core (200) enables the rod-moving core (100) to move to the closed position when the coil (400) is energized, the stop position and the release position being spaced apart in the axial direction (A) by a shock-absorbing distance (d_shock) The shock-absorbing distance (d_shock) is less than or equal to the rod-moving distance (d_rod).

## Description

The invention relates to an electromagnetic linear actuator.

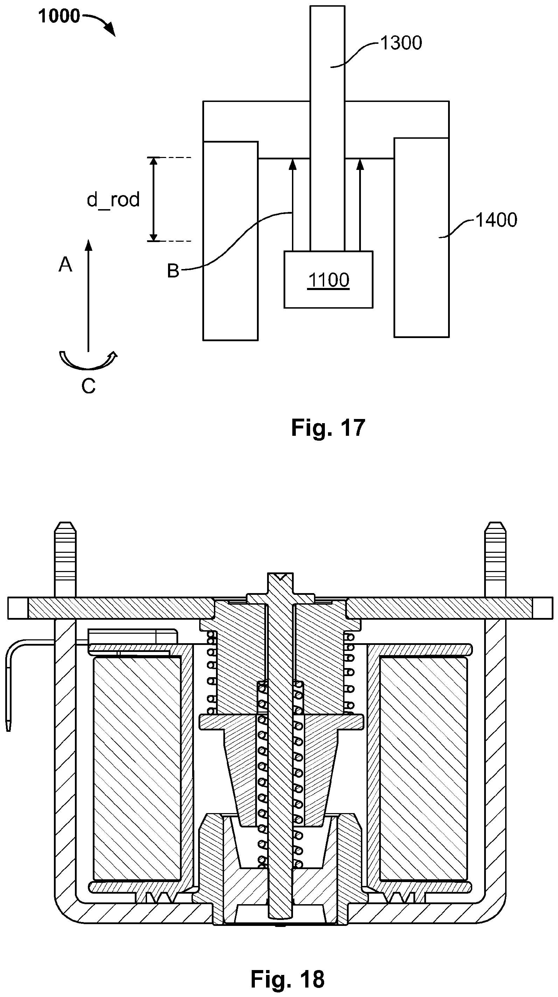

An electromagnetic actuator 1000, as for example shown in Fig. 17, is a device that converts electrical energy into mechanical motion through the use of electromagnetic principles. A linear actuators creates straight-line motion, here along an axial direction A. Here, a rod 1300, which is a long, slender bar, designed to withstand forces and transmit loads in the mechanical system, is arranged within the electromagnetic actuator 1000 and is moved by the electromagnetic actuator along an axial direction A.

To move the rod 1300, the electromagnetic actuator comprises an electromagnet, which is created by passing an electric current through a coil 1400 of wire. The coil 1400 is wound around a circumferential direction C thereby surrounding for example at least a part of the rod 1300.

The coil 1300 generates a magnetic flux B. A magnetic flux density, often represented by a vector field with vectors denoted by the symbol B, is a measure of the strength and direction of the magnetic field at a specific point. The generated magnetic flux B can interact with ferromagnetic materials (like iron or steel), creating a force that can move these materials. A magnetic flux B attracts or repels the moveable core 1100, depending on the actuator's design. This movement can be harnessed to perform mechanical work, namely moving the rod 1300. Thus, the electromagnetic actuator can move for example contacts of electrical switches. The electromagnetic actuator can also used for the purpose such as moving a valve, pressing a button, or driving a linear mechanism.

In general, electromagnetic linear actuator facilitate compared to other actuating devices high precision and control, fast response time, high efficiency in converting electrical energy to mechanical energy, smooth and continuous motion, low maintenance, quiet operation and high force density. Further requirements may be need to be fulfilled for an electromagnetic actuator depending on the application.

For example, a requirement may relate to a rod-moving distance, which is, as shown in Fig. 17, the distance between an open position when the coil is not energized and a closed position when the coil is energized. This rod-moving distance is for example predefined. Thus, it can be ensured that contacts of a switch are sufficiently spaced apart in the open position.

Further, a shock resistance to hold the open position, i.e. when the coil is not energized, in view of external shocks may be defined. As used herein, a mechanical shock is a sudden and often extreme force or impact that is applied to the electromagnetic actuator. It typically involves a rapid change in velocity, i.e. an acceleration, during for a very short period of time, causing stress and potential damage to the components of the system, e.g. by moving the actuator from an open position to a closed position. For example, switches such as high voltage contactors have to withstand up to 90 g mechanical shocks. In other words, the acceleration in case of shock a_{shock} = 90 g. To increase the shock resistance, a retaining force for retaining the actuator in the open position can be increased, for example by increasing a spring rate to urge the actuator in the open position. For example, an actuator with mass mₐ experiences a shock force F_{shock} = mₐ* a_{shock}.

Further, the actuator may be limited in view of weight and installation space requirements.

The object of the invention is to provide a solution for an actuator that is improved in parameters of the rod-moving distance, the resistance, the weight, and installation space. At the same time, modifications shall not significantly influence properties such as high precision and control, fast response time, high efficiency in converting electrical energy to mechanical energy, smooth and continuous motion, low maintenance, quiet operation and high force density.

This object is solved by the independent claim. Advantageous embodiments are solved by the dependent claims.

According to a general aspect, the actuator, as described above with Fig. 17, additionally comprises a shock-absorbing core disposed between a fixed core and a rod-moving core in a coil. The shock-absorbing core and the rod-moving core for forming at least in part an armature. The shock-absorbing core can move between a stop position and a release position, which are spaced apart in the axial direction by a shock-absorbing distance. The shock-absorbing core experiences a retaining force that retains the shock-absorbing core. This retaining force is for blocking the rod-moving core to move in the closed position when the coil is not energized or for holding the shock-absorbing core with a predetermined force together. This arrangement with an armature comprising two separate cores facilitates to increase the shock resistance. For example, the shock-absorbing core can act as a stopper for the rod-moving core. The retaining force is then for blocking the rod-moving core to move in the closed position when the coil is not energized. According to a further example, the shock absorbing core is coupled with a retaining force that is low compared to shock forces to the rod-moving core, and thus, the shock-absorbing core can freely move under shock conditions and the rod-moving core can be optimized for such shock conditions. According to the general aspect, in the release position the shock-absorbing core enables the rod-moving core to move to the closed position when the coil is energized. This facilitates to provide the rod-moving distance, which may be predefined.

Additionally, the shock-absorbing distance is less than or equal to the rod-moving distance. This facilitates to optimize the retaining force. In more detail, a shock-absorbing distance that is less than the rod-moving distance facilitates that a gap between the shock-absorbing core in the stop position and the fixed core is less than a gap between the rod-moving core in the open position and the fixed core. This facilitates that a magnetic flux density between the shock-absorbing core and the fixed core is increased. Thus, a higher magnetic force can be applied to the shock-absorbing core without increasing the coil. This facilitates to increase the retaining force for absorbing the shocks. Alternatively, the retaining force can be optimized for holding the shock-absorbing core in contact with the rod-moving core and the retaining force is less than a holding force for blocking the rod-moving core to move in the closed position when the coil is not energized. This facilitates that a coupling of the magnetic flux and the shock-absorbing core and the fixed core is optimized. Thus, a higher magnetic force can be applied to the armature without increasing the coil. This facilitates to increase the holding force for absorbing the shocks.

The invention will now be described in greater detail and in an exemplary manner using advantageous embodiments and with reference to the drawings. The described embodiments are only possible configurations in which, however, the individual features as described above can be provided independently of one another or can be omitted.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. The described embodiments are merely possible configurations and it must be borne in mind that the individual features as described above can be provided independently of one another or can be omitted altogether while implementing this invention. Further features and advantages will become apparent from the following more particular description of the various embodiments of the invention, as illustrated in the accompanying drawings, in which like references refer to like elements, and wherein:
- **FIG. 1**: is a cross-sectional perspective view of an electromagnetic linear actuator in an open position according to a first example;
- **FIG. 2**: is the electromagnetic linear actuator of Fig. 1 in the closed position;
- **FIG. 3**: is a front view of the Fig. 1;
- **FIG. 4**: is a front view of Fig. 2;
- **FIG. 5**: is a schematic view of an electromagnetic linear actuator according to a second example in the open position;
- **FIG. 6**: the electromagnetic linear actuator of Fig. 5 in the closed position;
- **FIG. 7**: is a cross-sectional perspective view of an electromagnetic linear actuator in an open position according to a third example;
- **FIG. 8**: is the electromagnetic linear actuator of Fig. 7 in the closed position;
- **FIG. 9**: is a front view of the Fig. 7;
- **FIG. 10**: is a front view of Fig. 8;
- **FIG. 11**: is a cross-sectional perspective view of an electromagnetic linear actuator in an open position according to a fourth example;
- **FIG. 12**: is the electromagnetic linear actuator of Fig. 11 in the closed position;
- **FIG. 13**: is a front view of the Fig. 11;
- **FIG. 14**: is a front view of Fig. 12;
- **FIG. 15**: is a schematic view of an electromagnetic linear actuator according to a fifth example in the open position;
- **FIG. 16**: the electromagnetic linear actuator of Fig. 15 in the open position;
- **FIG. 17**: is a schematic view of an electromagnetic linear actuator, and
- **FIG. 18**: is a front view of the electromagnetic linear actuator of Fig. 11 in the open position during a shock.

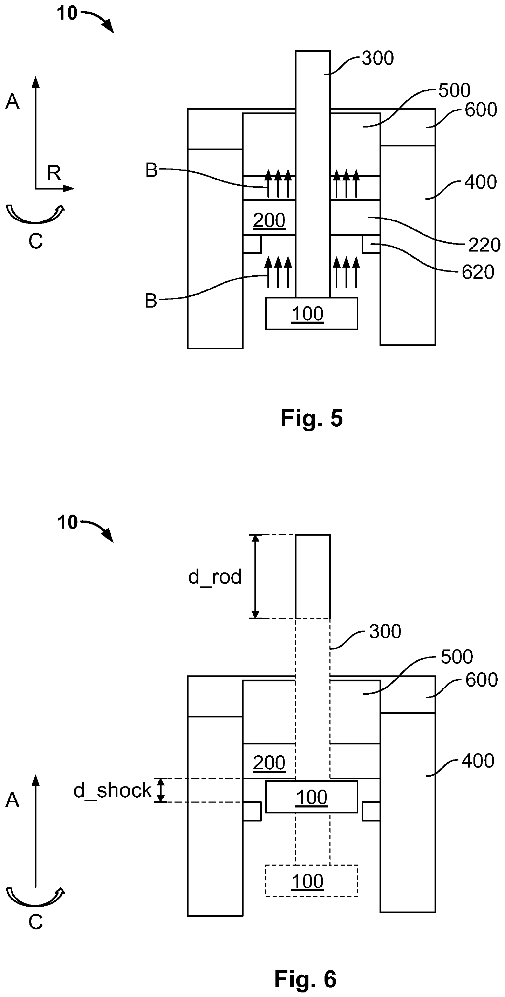

A first aspect relates to an electromagnetic linear actuator as shown in Fig. 5 for moving a rod 300 along an axial direction A relative to a support structure 600. For the description of an electromagnetic linear actuator and a rod is referred to the above description. Herein, support structure 600 refers to a framework or system designed to bear the components attached thereto, providing stability, strength, and support. It might be forming a housing around the components.

The electromagnetic actuator according to the first aspect comprises an exciting coil 400 wound around a circumferential direction C perpendicular to the axial direction A. For the description of the coil 400 is referred to the above description. In particular, the coil 400 wire is wound in the circumferential direction C. The coil 400 has multiple turns of the wire. A magnetic flux B of the turns adds in the center of the coil 400. The coil 400 generating the magnetic flux B has two axial ends, also referred to as the magnetic poles, namely the north and south pole. The magnetic flux B can be described by a vector field. In the coil 400 the magnetic flux B can be seen as being in first approximation build up by parallel filed vectors indicated by arrows in Figs. 5 and 17.

The electromagnetic actuator according to the first aspect comprises a fixed core 500 located at a first axial end of the coil 400 and fixed to the support structure 600. As used herein, a core is a piece of ferromagnetic material, such as iron or steel, placed inside the coil 400 of wire. It facilitates to enhance the magnetic flux B generated by the current flowing through the wire. Fixed to the support structure 600 means that the fixed core 500 is not moving relative to the support structure 600. The first axial end is for example close to the north pole, where the field lines are exit the coil 500, as shown in Fig. 5.

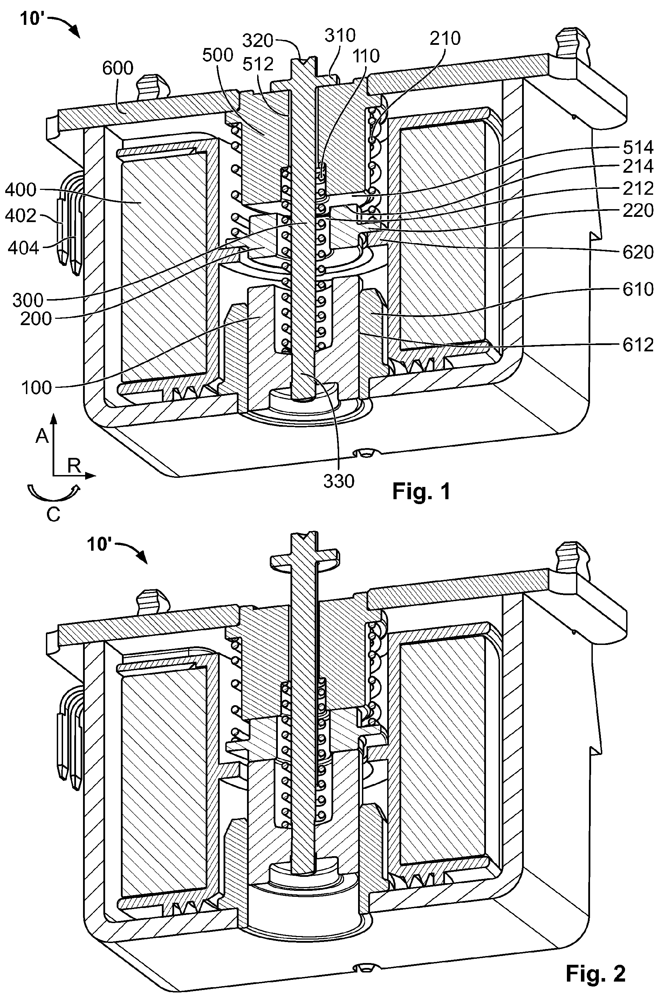

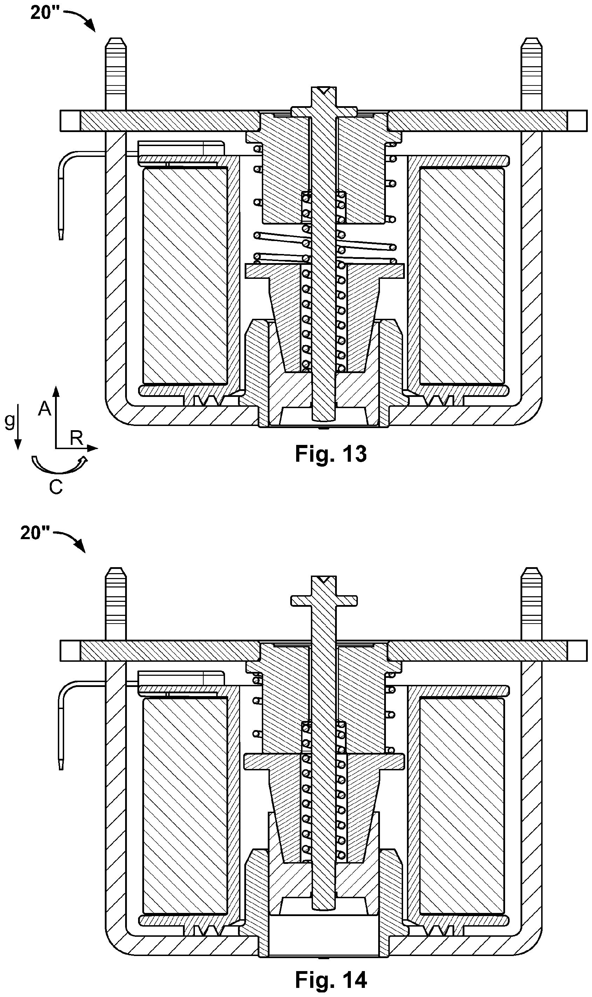

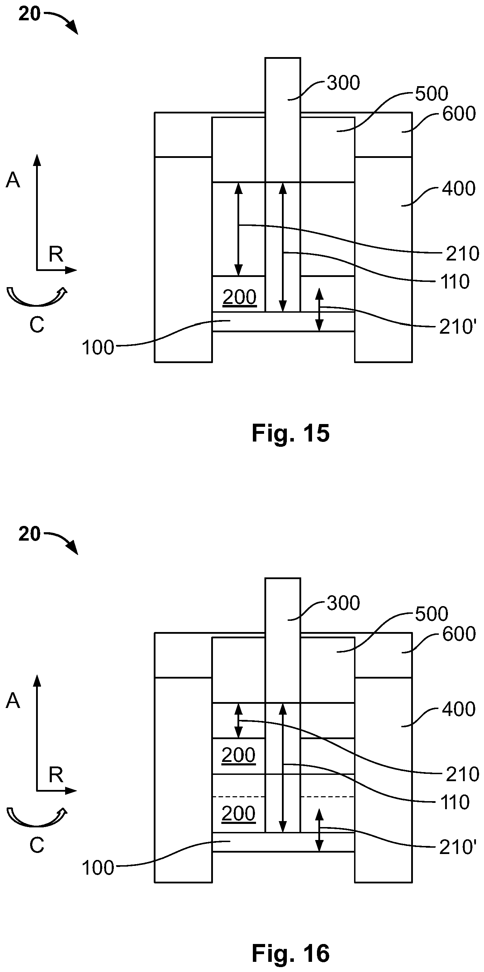

The electromagnetic actuator according to the first aspect comprises a rod-moving arrangement comprising a rod-moving core 100 arranged at a second axial end of the coil and to be attached to the rod. The rod-moving core is moving between an open position when the coil 400 is not energized, as for example shown in Figs. 1, 3, 5, 7, 9, 11, 13, 15, and 17 and a closed position, as for example shown in Figs. 2, 4, 6, 8, 10, 12, 14, and 16, when the coil 400 is energized. As used herein, "move" means that the rod-moving core 100 is displaceable between two different positions, the open position and the closed position. In the open position, if the actuator is for example a switch, a contact, such as a bridge contact, attached to the rod can open or close an electrical circuit. The second axial end is opposite the first axial end and, for example, near the south pole where the field lines enter the coil 500, as shown in Figs. 5 and 15.

In the electromagnetic actuator according to the first aspect, the open position and the closed position being spaced apart in the axial direction A by a rod-moving distance d_rod as shown in Figs. 6 and 16. The rod-moving distance d_rod can be predefined, for example, by how much a contact of a switch has to move between an open and a closed position.

The electromagnetic actuator according to the first aspect comprises a shock-absorbing arrangement with a shock-absorbing core 200 disposed between the fixed core 500 and the rod-moving core 100. In other words, the shock-absorbing core 200 is arranged within the coil 400, i.e. the wire is surrounding the shock-absorbing core 200 and the core is arranged between the opposing axial ends. As explained above, inside the coil the magnetic flux B of the coil 400 is strongest. Notably, the shock-absorbing core 200 and the rod-moving core 100 form together a moveable part of the actuator. This moveable part is usually called armature, which has a mass mₐ.

In view of the electromagnetic actuator according to the first aspect comprising two moveable parts, i.e. the rod-moving core 100 and the shock-absorbing core 200, the force to withstand shocks can be reduced. In particular, the rod-moving core 100 may have a mass m₁₀₀ and experiences a shock force F_{shock} = m₁₀₀* a_{shock}. Further, the shock-absorbing core 200 may have a mass m₂₀₀ and experiences a shock force F_{shock} = m₂₀₀* a_{shock}. In other words, by splitting the mass mₐ into m₁₀₀ and m₂₀₀, the force to withstand shocks for m₁₀₀ can be reduced. The shock absorbing core 200 can move while the rod-moving core 100 may not move in view of shocks as for example shown in Fig. 18. In normal operation, the combination of the m₂₀₀ of the shock absorbing core 200 and the m₁₀₀ of the rod-moving core 100 is used to operate the actuator during normal operation to conduct the magnetic flux and to allow the moving of the actuator. In other words, the shock-absorbing core 200 facilitates for taking over momentum in case of shocks.

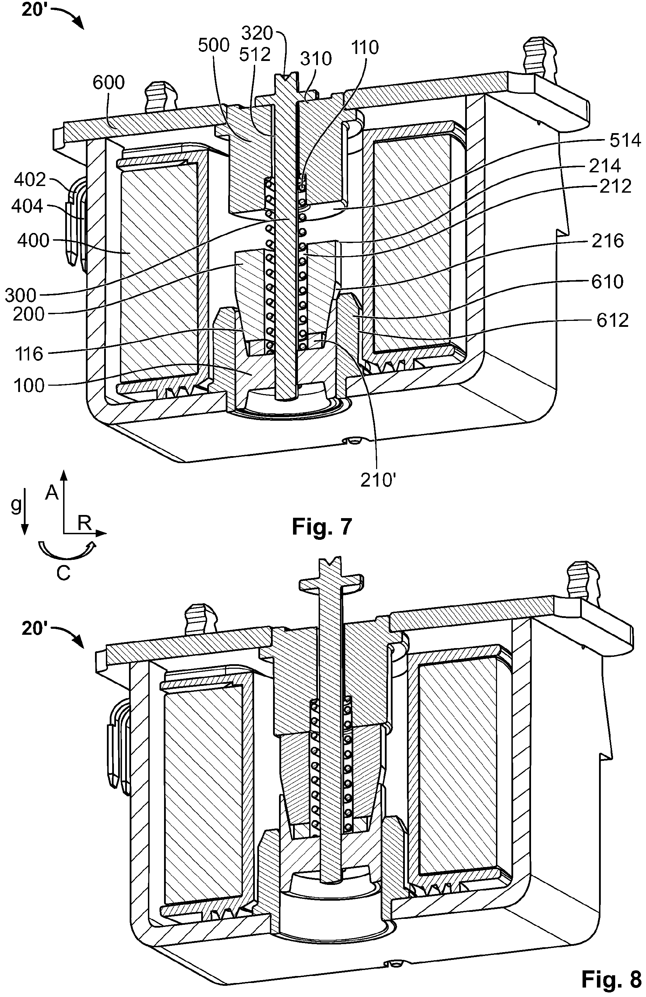

The shock-absorbing core 200 according to the first aspect moves between a stop position, as for example shown in Figs. 1, 3, 5, 7, 9, 11, 13, 15, and 17, in which the shock-absorbing core 200 is retained by a retaining force when the coil 400 is not energized and a release position, as for example shown in Figs. 2, 4, 6, 8, 10, 12, 14, and 16 in which the shock-absorbing core 200 enables the rod-moving core 100 to move to the closed position when the coil 400 is energized. The retaining force can for example be provided by a spring as shown in Figs. 1 to 4 and 11 to 14 or a permanent magnet as shown in Figs. 7 to 10. The retaining force facilitates to hold the shock-absorbing core 200 in the stop position in Figs 1 to 4 or to hold the shock-absorbing core 200 in contact with the rod-moving core 100 in Figs. 7 to 11. Thus, in the solution in Fig. 7 to 14, the retaining force has to compensate only the weight force and can be designed to be comparable small. In cases of a shock, as for example shown in Fig.18, the shock-absorbing core 200 is in the release position while the rod-moving core 100 remains in the open position. In other words, in Fig. 18 the shock-absorbing core 200 takes over momentum in case of the shock.

According to a first example, when the coil is not energized, and a shock occurs, the shock-absorbing core 200 enables to block the rod-moving core as shown in Figs. 1 to 4.

Alternatively, according to a second example shown in Figs. 7 to 11, the shock-absorbing core 200 is retained by the retaining force Fᵣₑₜₐᵢₙ, which is lower than a force generated by the shock of F_{shock200} = m₂₀₀* a_{shock}. Further, the rod-moving core 100 is hold by a holding force F_{hold}, which is larger than a force generated by the shock of F_{shock100} = m₁₀₀* a_{shock}. Thus, when the coil is not energized and a shock occurs, the shock-absorbing core 200 moves to release position while the rod-moving core 100 is hold in the open position. By splitting the masses of the moveable parts, F_{hold} can be reduced. Notably, Fᵣₑₜₐᵢₙ, is selected so that when the coil is not energized and no shock occurs, the shock-absorbing core 200 and the rod-moving core 100 are in contact. When energizing the coil to close the switch, a reduced magnetic force larger than F_{shock100} + F_{shock200} can move the rod moving core in the open position.

In the electromagnetic actuator according to the first aspect, the stop position and the release position being spaced apart in the axial direction by a shock-absorbing distance d_shock as shown in Fig. 5. In other words, according to one example, the shock-absorbing core and the retaining force thus defines a spring force or magnetic force of a permanent magnet, which is the force exerted by a spring when it is compressed or stretched from its natural length or an attracting magnetic force of a permanent magnet. This force can be described by Hooke's Law in case of spring, which states that the force exerted by a spring is directly proportional to the displacement of the spring from its equilibrium position. Similarly, this may be defined for a magnet or in view of gravity. The maximal displacement is here the shock absorbing distance d_shock. In case of a spring, the force F is then expressed as F = - k * d_shock with k the spring constant, e.g. the spring constant of a damping spring shown in Figs. 1 to 4 or the spring constant of a holding spring shown in Figs. 7 to 14. According to the first example shown in Figs. 1 to 4, the spring force counter acts shocks, which can be given in Newton (N), the unit of force. According to the second example shown in Figs. 7 to 14, the holding spring counter acts shocks. In view of the two moveable cores, each having a reduced mass compared to an armature with only one movable core, the spring constant of the holding spring can be reduced compared to an arrangement with only one core. Thus, the actuator described with the first aspect having two moveable cores with masses m₁₀₀ and m₂₀₀ compared to a core with one moveable core having mass m₁₀₀+m₂₀₀ facilitates to optimize the parameters in terms of a low overall weight, high shock resistance, and a large rod-moving distance d_rod. In particular, only one of the cores needs to be hold in place in case of shocks.

In the electromagnetic actuator according to the first aspect, the shock-absorbing distance d_shock is less than or equal to the rod-moving distance d_rod. According to the first example, the shock-absorbing distance d_shock is small compared to the rod-moving distance d_rod. As explained above, as the shock absorbing core 200 is arranged close to the fixed core 500 in the coil, the magnetic flux density increases. Thus, the reduced distance facilitates to use a coil with less weight compared to an armature consisting of only one core with the same mass, because the magnetic flux density is higher, and thus, this arrangement facilitates to move the shock-absorbing core 200, even if the shock-absorbing core 200 is hold with a larger retaining force in the stop position. Thus, the actuator described with the first example of the first aspect further facilitates to optimize the parameters in terms of a low overall weight, high shock resistance, and a large rod-moving distance d_rod. According to the second example of the first aspect, the retaining force is small compared to the holding force. In other words, as the rod-moving core 100 is hold in place in view of shocks while the shock-absorbing core 200 can move in view of shocks. In view of the reduced mass of the rod-moving core 100 compared to an armature consisting of only one core, the parameters can be optimized. In all solutions, the shock-absorbing core 200 is not connected to the rod, the actuator remains in the open position. Thus, the armature with two moveable cores facilitates for all solutions to use a coil with less weight compared to an armature consisting of only one core with a similar mass, because the mass of the armature is split and the magnetic coupling can be increased. The arrangement according the first example facilitates to move the shock-absorbing core 200 with the rod-moving core 100, even if the rod-moving core 100 is hold with a larger holding force. Thus, the actuator described with the first aspect facilitates to optimize the parameters in terms of a low overall weight, high shock resistance, and a large rod-moving distance d_rod.

A second aspect relates to an electromagnetic linear actuator according to the aspect 1, wherein, when the rod-moving core 100 is in the open position, the rod-moving core 100 is spaced apart from the shock-absorbing core 200 and the shock-absorbing core 200 is spaced apart from the fixed core 500 and the retaining force is for blocking the rod-moving core 100 to move in the closed position when the coil 400 is not energized. As used herein, objects that are spaced apart have a measurable distance between them. They are not in contact and are separated by a certain amount of space. As for example shown in Fig. 1, 3, 5, 7, and 9, the cores 100, 200, and 500 are spaced apart in the axial direction A.

A third aspect relates to an electromagnetic linear actuator according to any of the preceding aspects, when the rod-moving core 100 is in the closed position, the rod-moving core 100 is touching the shock-absorbing core 200 and the shock-absorbing core 200 is touching the fixed core 500. As used herein, objects that are touching have little to no distance between them. When they are touching, they are in contact. Thus, the objects are either very close with minimal gap or are in direct contact. As for example shown in Fig. 2, 4, 6, 8, and 10 to 16, at least two of the cores 100, 200, and 500 are touching in the axial direction A.

A fourth aspect relates to an electromagnetic linear actuator according to any of the preceding aspects, wherein the shock-absorbing core 200 and the fixed core 500 comprise a flat surface extending perpendicular to the axial direction A for contacting each other when the shock-absorbing core is in the release position. The magnetic flux density in the gap between these two surfaces, which are opposing and facing each other, has to be high to move the shock-absorbing core by the coil. The flat surface perpendicular to the axial direction A facilitates such a magnetic flux density in this region so that the shock-absorbing core can be moved. In particular, the flat surface is arranged in a central region within the coil 400. A central region is sufficiently spaced apart from the axial ends of the coil 400, i.e. not in a range of 10 % of the total length of the coil 400 in axial direction A measured from the axial end of the coil 400. In this region, the flux density is higher than close to the axial ends.

A fifth aspect relates to an electromagnetic linear actuator according to any of the preceding aspects, each of the shock-absorbing core 200 and the rod-moving core 100 comprise a conical surface that chamfers in an axial direction A for contacting each other when the rod-moving core is in the closed position. As for example shown in Figs. 7 to 14, the shock-absorbing core 200 and the rod-moving core 100 have an arrangement similar to a cone clutch. This arrangement avoids that flux bypasses the rod-moving core and facilitates to align the shock-absorbing core 200 to the rod-moving core 100 when moving to the closed position.

A sixth aspect relates to an electromagnetic linear actuator according to any of the preceding aspects, wherein the rod-moving arrangement further comprises a holding spring 110. As for example shown in Figs. 1 to 4 and 7 to 14, the holding spring 110 is attached to the rod-moving core 100 and the fixed core 500. For Figs. 1 to 4, the holding spring 110 facilitates urging the rod-moving core 100 with a holding force in the open position, when the coil is not energized. Thus, the rod-moving core 100 moves in the open position independent of a potential attracting force acting on the rod holding the electromagnetic linear actuator in the closed position and/or facilitates that the rod-moving core 100 stays in the open position in case of shocks.

A seventh aspect relates to an electromagnetic linear actuator according to any of the preceding aspects, wherein the shock-absorbing arrangement further comprises a force-mediating element 210, 210'. As for example shown in Figs. 1 to 4 and 11 to 14, the force-mediating element can comprise a force-mediating spring 210, which is attached to the shock-absorbing core 200 and the fixed core 500. As for example shown in Figs. 7 to 10, the force-mediating element can comprises a permanent magnet 210', which is for example disposed between the rod-moving core 100 and the shock-absorbing core 200. The force-mediating element facilitates urging the shock-absorbing core 200 with a force. Thus, according to the first example, the shock-absorbing core 200 can act as a stopper independent of an installation orientation of the electromagnetic linear actuator in Figs. 1 to 4 and/or the contact between shock-absorbing core 200 and rod-moving core is ensured in Figs. 7 to 14 in case of no shocks, wherein the shock-absorbing core is in particular for taking over momentum in case of shocks.

An eighth aspect relates to an electromagnetic linear actuator according to aspects 6 and 7, wherein the force-mediating spring 210 has a different spring rate than the holding spring 110. In case the force-mediating spring 210 has a different spring rate than the holding spring 110, as for example shown in Figs. 1 to 4, the force mediating spring 210 facilitates that, when the coil 400 is energized, to move rod-moving core 100 to touch the shock-absorbing core 200 in the stop position. In this situation, initially, only one spring is active, then when the first gap is overcome, the second spring is also engaged. The spring rate of both springs have then be added together. Notably, the spring 210 does not necessarily have to have a higher spring rate. Advantageously, the spring 210 has a low or degressive spring rate and a high preload. In this configuration, the magnetic flux density in the coil 400 is increased, in particular in the gap between the shock-absorbing core 200 and the fixed core 500. This increased magnetic flux density facilitates that the rod-moving core 100 and the shock-absorbing core 200 are moved in the closed position and the release position, respectively.

In case the force-mediating spring 210 has a lower spring rate than the holding spring 110, the force mediating spring 210 facilitates to ensure the contact between shock-absorbing core 200 and rod-moving core 100.

According to an option of the eighth aspect, the force-mediating spring 210 is surrounding in a circumferential direction C the holding spring 110. Even if this arrangement requires some space for the force-mediating spring 210, which reduces the coupling efficiency of the coil 400 in view of the reduced cross sectional area of the shock-absorbing core 200, the separation of the moveable cores still improves the overall parameters, and thus, facilitates to optimize the shock absorbance of the armature.

A ninth aspect relates to an electromagnetic linear actuator according to any of the preceding aspects, wherein the shock-absorbing core 200 comprises a resting core-projection 220 extending in a radial direction R perpendicular to the axial direction A. The resting core-projection 220 facilitates to limit the movement of the shock-absorbing core 200 in the stop position in the direction of the stop position. Thus, the shock-absorbing distance can be limited with high precision. Preferably, the resting core-projection 220 is short in the axial direction A compared to a length of the shock-absorbing core 200 in the axial direction A. This facilitates to reduce the influence to the magnetic flux density in the coil close to a central axial. Advantageously, the force-mediating spring 210 of aspect 7 is attached to the resting core-projection 220 of the shock-absorbing core 200 and the fixed core 500. This is a particular compact arrangement that facilitates to increase the magnetic flux density.

A tenth aspect relates to an electromagnetic linear actuator according to any of the preceding aspects, wherein the support structure 600 comprises a resting support-projection 620 extending in a radial direction R perpendicular to the axial direction A, the resting support-projection 620 limiting the movement of the shock-absorbing core 200 in the stop position in the direction of the stop position so that the shock-absorbing distance is less than the rod-moving distance. Thus, the shock-absorbing distance can be limited with high precision. Preferably, the resting support-projection 620 is made of a non-ferromagnetic material to not influence, in particular reduce, the magnetic flux density in the coil close to the central axial axis.

An eleventh aspect relates to an electromagnetic linear actuator according to any of the preceding aspects, wherein the shock-absorbing core 200 is spaced apart from the rod 300. This facilitates an independent movement of the shock-absorbing core 200 and the rod 300. Advantageously, the shock-absorbing 200 core comprises a through hole 212 and the rod 300 is guided in the through hole. Even if this arrangement requires some space for the through hole 212, which reduces the coupling efficiency of the coil 400 in view of the reduced cross sectional area of the shock-absorbing core 200, the separation of the moveable cores still improves the overall parameters, and thus, facilitates to optimize the shock absorbance of the armature.

A twelfth aspect relates to an electromagnetic linear actuator according to any of the preceding aspects, wherein the support structure 600 comprises a core-guide portion 610. This core-guide portion 610 facilitates guiding the movement of the rod-moving core 100 along the axial direction A. Advantageously, the core-guide portion 610 comprises a recessed hole, preferably a through hole 612 and the rod-moving core 100 is guided in the through hole 612. This is a particular compact arrangement that facilitates to increase the magnetic flux density. Additionally or alternatively, the core-guide portion 610 of the support structure 600 comprises a ferromagnetic material.

A thirteenth aspect relates to an electromagnetic linear actuator according to any of the preceding aspects, wherein the fixed core 500 comprises a rod-guide portion 512 for guiding the movement of the rod 300 along the axial direction A. Advantageously, the fixed core 500 comprises a through hole 512 and the rod 300 is guided in through hole 512. This is a particular compact arrangement that facilitates to increase the magnetic flux density. Preferably, the above discussed guiding portions, in particular the through holes 212, 512, 612, are aligned on in the axial direction to each other.

A fourteenth aspect relates to an electromagnetic linear actuator according to any of the preceding aspects further comprising the rod 300 attached to the rod-moving core 100, wherein the rod 300 comprises a limiting projection 310 extending in a radial direction R perpendicular to the axial direction A. The limiting projection 310 facilitates limiting the movement of the rod 300 in the open position in the direction of the open position. Thus, the rod-moving distance d_rod can be limited with high precision.

A fifteenth aspect relates to a switch for switching an electric circuitry, the switch comprising an electromagnetic linear actuator according to any of the preceding aspects. An electrical switch is a device that is used to open or close an electrical circuit, thereby controlling the flow of electricity within the circuit. In particular, the switch is a high voltage (HV) switch used in electric vehicles such as a car.

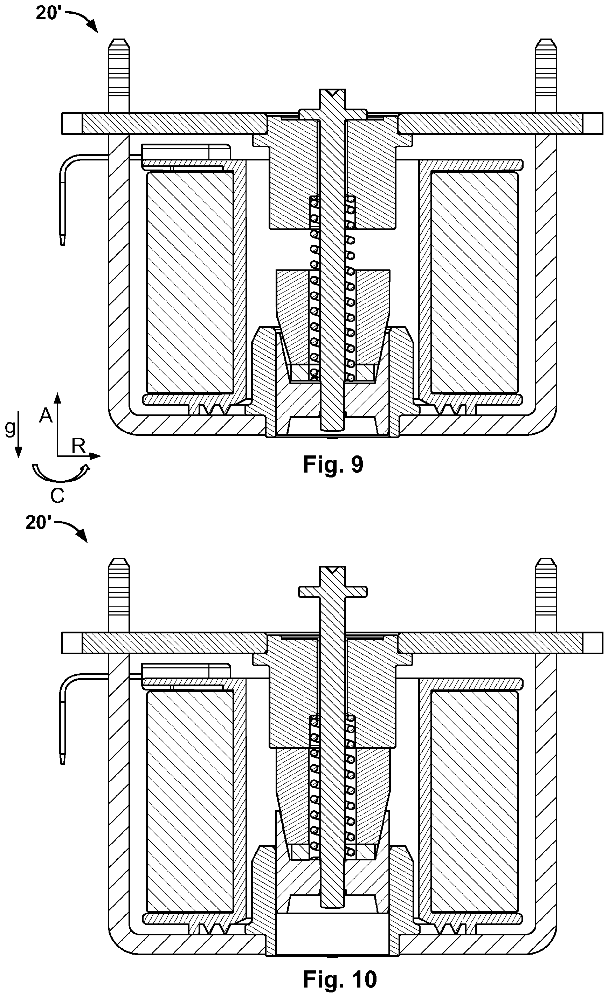

Examples will now be in detail explained in view of the figures and in particular with Figs. 1 to 4 (first example), Figs. 7 to 10 (third example) and Figs. 10 to 14 (fourth example).

The electromagnetic linear actuator of the three examples (Figs. 1 to 4 and 7 to 14) moves a rod 300 along an axial direction A relative to a support structure 600. At an external end 320 of the rod 300 a not shown to be operated device, e.g. a contactor or a valve, can be attached. The rod 300 can further comprise a limiting projection 310 extending in a radial direction R perpendicular to the axial direction A. For example, an annular ring in the examples shown in Figs. 1 to 4, and 7 to 14 forms the limiting projection 310.

The electromagnetic actuator of all examples comprises an exciting coil 400 wound around a circumferential direction C perpendicular to the axial direction A and a fixed core 500 is located at a first axial end of the coil 400 and fixed to the support structure 600. The coil can comprise terminals 402 and 404 to control and power the coil. The fixed core 500 can comprise a rod-guide portion 512 for guiding the movement of the rod 300 along the axial direction A. As shown in Figs. 1 to 4 and 7 to 14, the rod-guide portion 512 in the fixed core 500 is formed by a through hole and the rod 300 is guided in through hole.

The electromagnetic actuator of the three examples (Figs. 1 to 4 and 7 to 14) comprises a rod-moving arrangement comprising a rod-moving core 100 arranged at a second axial end of the coil 400 and the rod-moving core 100 is attached to an internal end 330 of the rod 300. The rod-moving arrangement further comprises a holding spring 110 urging the rod-moving core with a holding force in an open position when the coil is not energized. As shown in Figs. 1 to 4 and 7 to 14, the holding spring 110 is attached to the rod-moving core 100 and the fixed core 500. In particular, the holding spring 110 is surrounding the rod 300 and fixed in a central recess formed in the rod-moving core 100 and a central recess formed in the fixed core 500.

The support structure 600 can comprise a core-guide portion 610 for guiding the movement of the rod-moving core 100 along the axial direction A. In particular, the core-guide portion 610 together with the rod-guide portion 512 of the fixed core 500 facilitates to move the rod 300 precisely along the axial direction A. For example, as shown in Figs. 1 to 4 and 7 to 14, the core-guide portion 610 comprises a through hole 612 and the rod-moving core 100 is guided in the through hole 612. Even not shown in the Figures, the core-guide portion 610 of the support structure 600 can comprise a ferromagnetic material while the remaining support structure 600 can comprise a non-ferromagnetic material. The core-guide portion 610 can be clamped between the support structure 600 and a housing part of the coil 400. The support structure 600 can further comprise a resting support-projection 620 extending in a radial direction R perpendicular to the axial direction A. For example, an annular ring in the examples shown in Figs. 1 to 4 forms the resting support-projection 620.

The electromagnetic actuator of the three examples (Figs. 1 to 4 and 7 to 14) comprises a shock-absorbing arrangement comprising a shock-absorbing core 200 disposed between the fixed core 500 and the rod-moving core 100. Each of the shock-absorbing core 200 and the fixed core 500 comprise a flat surface 214 and 514 extending perpendicular to the axial direction A. The flat surfaces 214 and 514 face each other and are located in the coil 400. In particular, the flat surfaces are arranged in a central region in an axial direction A within the coil 400. The shock-absorbing core 200 can further comprise a resting core-projection 220 extending in a radial direction R perpendicular to the axial direction A. For example, an annular ring in the solutions shown in Figs. 1 to 4 forms the resting core-projection 220. Further, an annular ring above a conical surface in the solutions shown in Figs. 10 to 14 can form the resting core-projection 220. Further, the shock-absorbing core 200 can be spaced apparat from the rod 300. For example, in the solution shown in Figs. 1 to 4 and 7 to 14, the shock-absorbing core 200 comprises a through hole 212 and the rod 300 is guided in the through hole 212.

The rod-moving core 100 of the three examples (Figs. 1 to 4 and 7 to 14) can be moved between an open position when the coil 400 is not energized and a closed position when the coil 400 is energized.

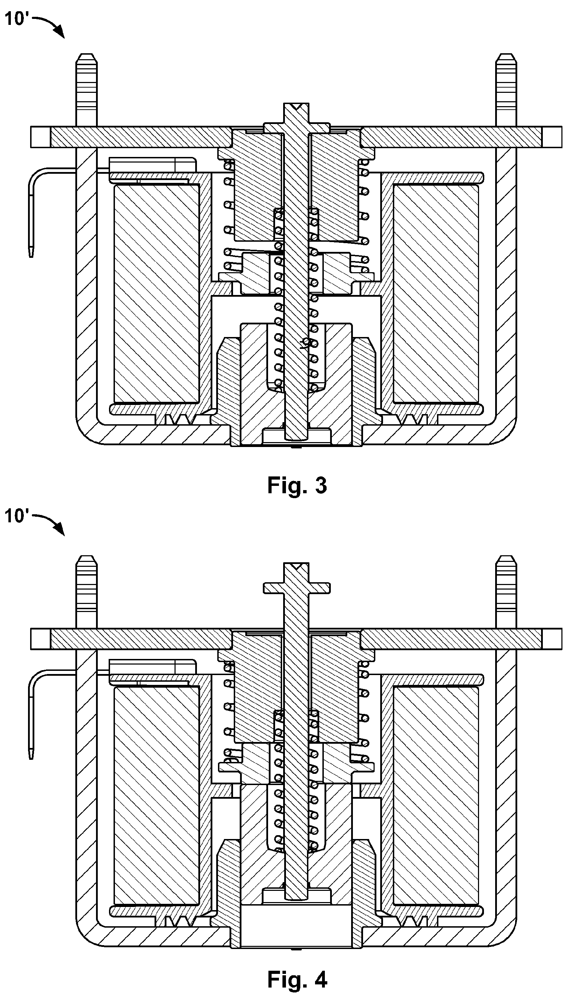

The open position is shown in Figs. 1, 3, 5, 7, 9, 11, 13, and 15. In particular, in Figs. 1, 3, and 5 when the rod-moving core 100 is in the open position, the rod-moving core 100 is spaced apart from the shock-absorbing core 200 and the shock-absorbing core 200 is spaced apart from the fixed core 500. As further shown in Figs. 1 and 3, the limiting projection 310 of the rod 300 limits the movement of the rod 300 and the attached thereto rod-moving core 100 in the open position in the direction of the open position.

The closed position is shown in Figs. 2, 4, 6, 8, 10, 12, 14, and 16. In particular, when the rod-moving core 100 is in the closed position, the rod-moving core 100 is touching or as close as possible to the shock-absorbing core 200 and the shock-absorbing core 200 is touching the fixed core 500. As indicated in the schematic Fig. 6 , the open position and the closed position are spaced apart in the axial direction A by a rod-moving distance d_rod.

The shock-absorbing core 200 of the three examples (Figs. 1 to 4 and 7 to 14) can be moved between a stop position and a release position. The stop position and the release position being spaced apart in the axial direction A by a shock-absorbing distance d_shock as shown in Fig. 6.

The shock-absorbing core 200 in the stop position is shown in Figs. 1, 3, 5, 7, 9, 11, 13, and 15. As shown in Figs. 1 to 6, the shock-absorbing core 200 is retained by a retaining force for blocking the rod-moving core 100 to move in the closed position when the coil is not energized. In other words, the retaining force is selected to be larger than a force of a shock acting on the electromagnetic actuator. The resting support-projection 620 limits the movement of the shock-absorbing core 200 in the stop position in the direction of the stop position.

According to the first example, shown in Figs. 1 to 4, the shock-absorbing arrangement comprises a force mediating spring 210, which is referred within the first example as a damping spring 210, for urging the shock-absorbing core 200 with a damping force in the stop position. For example, the damping spring 210 is attached to the shock-absorbing core 200, here the resting core projection 220, and an annular ring formed at the fixed core 500. In particular, in the first example, the combination of spring 210 and 110 has a higher spring rate than the holding spring 110 alone in case that the masses of the shock-absorbing core 200 is equal the rod-moving core 100. Depending on the mass distribution between the two cores, alternative spring rates may be defined. As shown in Figs. 1 to 4, the damping spring 210 is surrounding in a circumferential direction C the holding spring 110. Further, the resting core-projection 220 limits the movement of the shock-absorbing core 200 in the stop position in the direction of the stop position. The spring force F = -k *d_shock counter acts shocks, with k being the spring rate of the damping spring 210, of the shock force of F_{shock200} = m₂₀₀* a_{shock}.

A more general solution of the first example is shown in a second example in Figs. 5 and 6.

According to the examples, shown in Figs. 7 to 14, the shock-absorbing arrangement comprises a force mediating element, in particular the permanent magnet 210' and the force mediating spring 210.

In Figs. 7 to 10 a third example with a permanent magnet 210' is discussed. The permanent magnet 210' is for urging the shock-absorbing core 200 with a retaining force to the rod-moving core 100 as long as the shock is lower than magnetic force. Here the magnetic force is short range. For example, the permanent magnet 210' can be attached to the rod-moving core 100 or the shock-absorbing core 200. In particular, in the third example, the permanent magnet 210' ensures contact of the rod-moving core 100 and the shock-absorbing core 200 in case of no shocks and releases a contact between the rod-moving core 100 and the shock-absorbing core 200 in case of shocks. Further, the holding spring 110 holds the rod-moving core 100 F_{shock100} = m₁₀₀* a_{shock} in the open position even in the event of shock.

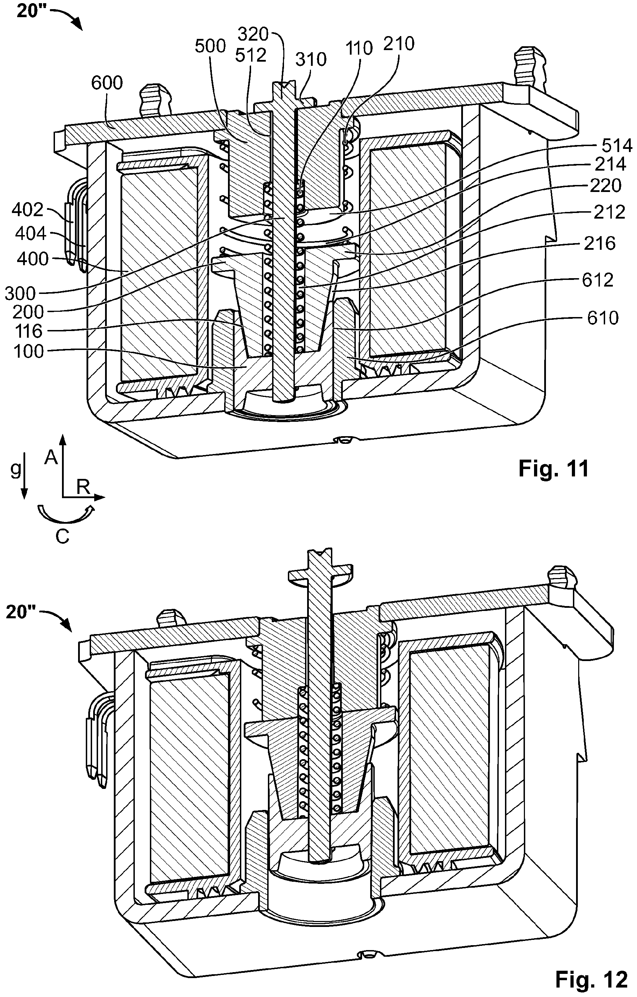

In Figs. 11 to 14 and 18, a fourth example with a force mediating spring 210 is discussed. The force mediating spring 210 has a similar function as the permanent magnet 210' of the third example, in particular the force mediating spring 210 is for urging the shock-absorbing core 200 with a retaining force to the rod-moving core 100. In particular, in the fourth example, the force mediating spring 210 ensures contact of the rod-moving core 100 and the shock-absorbing core 200 in case of no shocks and releases a contact between the rod-moving core 100 and the shock-absorbing core 200 in case of shocks as shown in Fig. 18. Further, the holding spring 110 holds the rod-moving core 100 in the open position even in the event of shocks as shown in Fig. 18. In particular, in the fourth example, the force mediating spring 210 has a lower spring rate than the holding spring 110. The spring has to balance the gravity force. As shown in Figs. 11 to 14 and 18, the force mediating spring 210 is surrounding in a circumferential direction C the holding spring 110.

A more general solution of the third and fourth example is shown in a fifth example in Figs. 15 and 16.

According to a variant shown with regard to the third and fourth example, as shown in Figs. 7 to 14, the shock-absorbing core 200 can comprise a conical surface 216 and the rod-moving core 100 can comprise a conical surface 116, the conical surfaces 116, 216 are facing each other and chamfers in an axial direction A. This solution can be also applied to the first example. The conical surfaces 116, 216 contact each other and facilitate that a magnetic flux does not bypass the rod-moving core.

The shock-absorbing core 200 in the release position is shown in Figs. 2, 4, 6, 8, 10, 12, 14, and 16. In the release position, the shock-absorbing core 200 enables the rod-moving core 100 to move to the closed position, when the coil is energized.

As in particular shown in Fig. 6, the shock-absorbing distance can be less than the rod-moving distance. Thus, as shown in Fig. 5, the magnetic flux density B between the shock absorbing core 200 and a fixed core 500 is increased compared to a magnetic flux density between a rod-moving core 100 and a fixed core 500 shown in the solution of Fig. 11, which does not comprise the shock absorbing core 200. This increased flux density facilitates that the shock-absorbing core 200, which is hold by retaining force for absorbing shocks, can be moved by coil 400 in view of the increased magnetic flux density.

As in particular shown in Figs. 15 and 16, an armature comprising two cores facilitates that a holding spring 110 needs to hold only the rod-moving core 100 in the open position while the shock absorbing core 200 can move, during a shock, between rod-moving core 100 and the fixed core 500.

### REFERENCE NUMERALS

| **Reference Numeral** | **Description** |
|---|---|
| | |
| 10, 1000 | electromagnetic actuator |
| 100 | rod-moving core |
| 110 | holding spring |
| 116 | conical surface |
| 200 | shock-absorbing core |
| 210 | force-mediating spring |
| 210 | permanent magnet |
| 212 | through hole |
| 214 | flat surface |
| 216 | conical surface |
| 220 | resting core-projection |
| 300, 1300 | Rod |
| 310 | limiting projection |
| 320 | external end |
| 330 | Internal end |
| 400, 1400 | Coil |
| 402, 404 | Terminal |
| 500 | Fixed core |
| 512 | through hole |
| 514 | flat surface |
| 600 | support structure |
| 610 | core-guide portion |
| 612 | through hole |
| 620 | resting support-projection |

## Claims

1. Electromagnetic linear actuator (10) for moving a rod (300) along an axial direction (A) relative to a support structure (600), the electromagnetic actuator comprising:
an exciting coil (400) wound around a circumferential direction (C) perpendicular to the axial direction (A);
a fixed core (500) located at a first axial end of the coil (400) and fixed to the support structure (600);
a rod-moving arrangement comprising a rod-moving core (100) arranged at a second axial end of the coil (400) and for attaching to the rod (300),
the rod-moving core (100) moving between an open position when the coil (400) is not energized and a closed position when the coil (400) is energized,
the open position and the closed position being spaced apart in the axial direction (A) by a rod-moving distance (d_rod);
a shock-absorbing arrangement comprising a shock-absorbing core (200) disposed between the fixed core (500) and the rod-moving core (100),
the shock-absorbing core (200) moving between a stop position, in which the shock-absorbing core (200) is retained by a retaining force and a release position in which the shock-absorbing core (200) enables the rod-moving core (100) to move to the closed position when the coil (400) is energized,
the stop position and the release position being spaced apart in the axial direction (A) by a shock-absorbing distance (d_shock); and
wherein the shock-absorbing distance (d_shock) is less than or equal to the rod-moving distance (d_rod).

2. Electromagnetic linear actuator (10) according to claim 1, wherein, when the rod-moving core (100) is in the open position, the rod-moving core (100) is spaced apart from the shock-absorbing core (200) and the shock-absorbing core (200) is spaced apart from the fixed core (500) and the retaining force is for blocking the rod-moving core (100) to move in the closed position when the coil (400) is not energized.

3. Electromagnetic linear actuator (10) according to any of the preceding claims, when the rod-moving core (100) is in the closed position, the rod-moving core (100) is touching the shock-absorbing core (200) and the shock-absorbing core (200) is touching the fixed core (500).

4. Electromagnetic linear actuator (10) according to any of the preceding claims, wherein the shock-absorbing core (200) and the fixed core (500) comprise a flat surface (214, 514) extending perpendicular to the axial direction (A) for contacting each other when the shock-absorbing core (200) is in the release position, optionally wherein the flat surface (214, 514) is arranged in a central region within the coil (400).

5. Electromagnetic linear actuator (10") according to any of the preceding claims, each of the shock-absorbing core (200) and the rod-moving core (100) comprise a conical surface (216, 116) that chamfers in an axial direction (A) for contacting each other when the rod-moving core (100) is in the closed position.

6. Electromagnetic linear actuator (10) according to any of the preceding claims, wherein the rod-moving arrangement further comprises a holding spring (110) for urging the rod-moving core (100) with a holding force in the open position when the coil (400) is not energized, optionally wherein the holding spring (110) is attached to the rod-moving core (100) and the fixed core (500).

7. Electromagnetic linear actuator (10') according to any of the preceding claims, wherein the shock-absorbing arrangement further comprises a force-mediating element (210, 210') for urging the shock-absorbing core (200) with a force in the direction of the rod-moving core.

8. Electromagnetic linear actuator (10') according to claim 7, wherein the force mediating element comprises at least one of a force-mediating spring (210), which is preferably attached to the shock-absorbing core (200) and the fixed core (500), and a permanent magnet (210'), which is preferably disposed between the rod-moving core (100) and the shock-absorbing core (200), the shock-absorbing core (200) for taking over momentum in case of shocks.

9. Electromagnetic linear actuator (10') according to claims 6 to 8, wherein the force-mediating spring (210) has a different spring rate than the holding spring (110), optionally wherein the force-mediating spring (210) is surrounding in a circumferential direction (C) the holding spring (110).

10. Electromagnetic linear actuator (10, 10') according to any of the preceding claims, wherein the shock-absorbing core (200) comprises a resting core-projection (220) extending in a radial direction (R) perpendicular to the axial direction (A), the resting core-projection (220) limiting the movement of the shock-absorbing core (200) in the stop position in the direction of the stop position, optionally wherein the force-mediating spring (210) of claim 8 is attached to the resting core-projection (220) of the shock-absorbing core (200) and the fixed core (500).

11. Electromagnetic linear actuator (10) according to any of the preceding claims, wherein the support structure (600) comprises a resting support-projection (620) extending in a radial direction (R) perpendicular to the axial direction (A), the resting support-projection (620) limiting the movement of the shock-absorbing core (200) in the stop position in the direction of the stop position so that the shock-absorbing distance (d_shock) is less than the rod-moving distance (d_rod).

12. Electromagnetic linear actuator (10) according to any of the preceding claims, wherein the shock-absorbing core (200) is spaced apart from the rod (300), optionally wherein the shock-absorbing core (200) comprises a through hole (212) and the rod (300) is guided in the through hole (212).

13. Electromagnetic linear actuator (10) according to any of the preceding claims, wherein the support structure (600) comprises a core-guide portion (610) for guiding the movement of the rod-moving core (100) along the axial direction (A), optionally wherein the core-guide portion (610) comprises a hole (612) and the rod-moving core (100) is guided in the through hole (612), optionally wherein the core-guide portion (610) of the support structure (600) comprises a ferromagnetic material and/or
wherein the fixed core (500) comprises a rod-guide portion (512) for guiding the movement of the rod (300) along the axial direction (A), optionally wherein the fixed core (500) comprises a through hole (512) and the rod (300) is guided in the through hole (512).

14. Electromagnetic linear actuator (10) according to any of the preceding claims further comprising the rod (300) attached to the rod-moving core (100), wherein the rod (300) comprises a limiting projection (310) extending in a radial direction (R) perpendicular to the axial direction (A), the limiting projection (310) limiting the movement of the rod (300) in the open position in the direction of the open position.

15. Switch for switching an electric circuitry, the switch comprising an electromagnetic linear actuator (10) according to any of the preceding claims.
